# EUROPEAN PATENT APPLICATION

(11) **EP 1 455 545 A1**
(43) Date of publication of application: **08.09.2004**
(21) Application number: 03360035.4
(22) Date of filing: 05.03.2003
(51) Int. Cl.: H04Q 7/22

(54) **Method, network server and mobile device for providing services**

(71) Applicant: ALCATEL, 75008 Paris (FR)
(72) Inventor: Rössler, Horst, 70794 Filderstadt (DE)
(74) Representative: LOUIS, PÖHLAU, LOHRENTZ

(57) **Abstract**

The present invention relates to a method for providing services through a mobile device (50) connected to a wireless communication network, a network server (3) and a mobile device for supporting the provisioning of services. A location agent (32) determines location data defining the current location of the mobile device (50). Further, the location agent (53) accesses user profile data (322) of an associated user, wherein the user profile data (322) defining user behavior or user preferences. The location agent (543) analyzes context data which comprises said location data and said user profile data (322). The location agent (32) creates based on the analysis a corresponding service request requesting the provisioning of a specific service and sends said service request to an appropriate service resource (41, 42, 43).

## Description

The present invention relates to a method for providing services through a mobile device connected to a wireless communication network. The present invention further relates to a mobile device for supporting the provisioning of services, wherein the mobile device comprises a network communication unit for communicating via a wireless communication network and a user interface communication unit for communicating with a user. The present invention further relates to a network server for supporting the provisioning of services, wherein the network server comprises a communication unit for communicating via a wireless communication network with mobile devices.

Today's mobile communication systems make possible it for users of mobile phones to have access to a wide variety of information.

Further, EP 1 008 946 A1 describes to equip a personal digital assistant, a wireless telephone, a car phone or any other programmable device with a global positioning system (=GPS) receiver. This global positioning system receiver informs the mobile device about its location. The GPS receiver reports the location either periodically or when it is polled by the mobile device.

The mobile device alerts the user whenever it arrives at a predetermined location. Further, it discloses to the user whatever information the user has chosen to associate with this predetermined location.

It is the object of the present invention to improve the provisioning of services to users of a wireless communication network.

The object of the present invention is achieved by a method for providing services through a mobile device connected to a wireless communication network, wherein the method comprises the steps of: determining location data defining the current location of the mobile device; accessing user profile data of an associated user, the user profile data defining users behavior or user preferences; analyzing context data comprising said location data and said user profile data; and creating based on said analysis a corresponding service request requesting the provisioning of a specific service and sending said service request to an appropriate service resource. The object of the present invention is further achieved by a network server for supporting the provisioning of services, wherein the network server comprises a communication unit for communicating via a wireless communication network with mobile devices and at least one location agent. The location agent determines location data defining the current location of a mobile device, accessing user profile data of an associated user, wherein the user profile data defines user behavior or user preferences, analyzes context data comprising said location data and said user profile data, creates based on said analysis a corresponding service request requesting the provisioning of a specific service, and sends said service request to an appropriate service resource. The object of the present invention is further achieved by a mobile device for supporting the provisioning of services, wherein the mobile device comprises a network communication unit for communicating via a wireless communication network, a user interface communication unit for communicating with the user and at least one location agent.

Various advantages are achieved by this invention:

The invention helps to improve the user friendliness of a wide variety of services. It makes possible it to perform a central personalization of a plurality of services which, in addition to the improvement of service quality, reduces communication load, processing time, and quantity of stored service data. Further, consistency and reuse of context data are improved.

According to a preferred embodiment of the invention, the addressed services are information services and the invention is used to deliver information in an enhanced way. Information is filtered and delivered in a relevant context dependent on the geographic location of the user. This prevents that the user is overwhelmed by information overload.

Further, the invention can be implemented within existing telecommunication systems without development of additional hardware components. This guarantees an easy and efficient implementation of the invention into existing systems.

Further advantages are achieved by the embodiments of the invention indicated by the dependent claims.

According to a preferred embodiment of the invention, the user behavior or user preferences of a user are monitored and the user profile is dynamically established by analyzing such monitored data. Thereby, user profile data are automatically created and automatically adapted to the current situation. This improves the quality of context data and helps to address the right service. Further advantages are achieved by monitoring the users tracking path over a period of time, for example by periodically polling a localization service. Further, the consumer behavior of the user can be monitored. Such further data are used as additional input data for creating and adapting user profile data.

Further, a security procedure can be executed when accessing the user profile data. This prevents unauthorized access to user profile data. Further, it becomes possible to store the user profile data in a network server which is accessible for a plurality of mobile devices.

Further improvements are achieved by taking further context data into account, for example time or temperature. Thereby, service provisioning can be better adapted to current user needs.

According to a preferred embodiment of the invention, the location agent is a mobile agent according to mobile agent technology which is downloaded from a network server. Necessary software amendments are reduced to a minimum and central control of the location agent is kept.

Further, it is possible to locate the location agent and the user profile data at different places. User profile data is stored at a network server. Location agents contact the network server to access user profile data of the associated user. Location agents are enabled to create, store and adapt user profile data independent on the mobile device currently used by the associated user.

According to a preferred embodiment of the invention, the location agent accesses a localization server of the wireless communication network for determining the current location of the mobile device. Thereby, the mobile device has not to provide functionalities for locating the position of the mobile device and the invention can be applied to a wide variety of different types of mobile devices.

These as well as other features and advantages of the invention will be better appreciated by reading the following detailed description of presently preferred exemplary embodiments taken in conjunction with accompanying drawings of which:
- Fig.1: is a block diagram of a communication system comprising several mobile devices and a network server according to the present invention.
- Fig.2: is a block diagram showing a mobile device and the network server of Fig. 1.
- Fig.3: is a block diagram showing several network servers and a mobile device according to the present invention.
- Fig. 4: is a block diagram showing a mobile device according to the present invention.

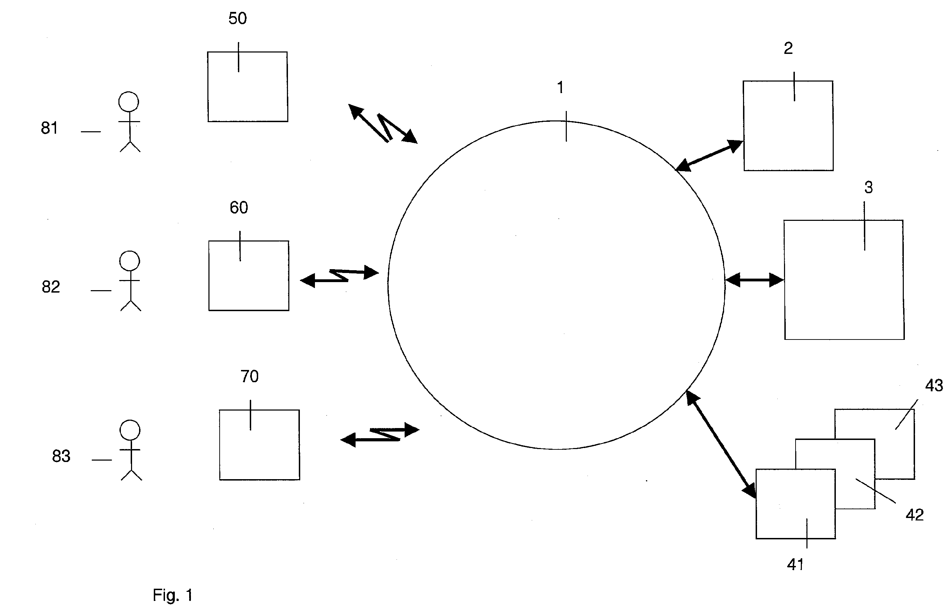

Fig 1 shows a communication network 1, several mobile devices 50, 60 and 70, and several network servers 2, 3, 41, 42 and 43.

The communication network 1 is a wireless communication network enabling a wireless communication between the mobile devices 50, 60 and 70 and network side resources. For example, the communication network 1 is a cellular phone network, for example according to the GSM or UMTS standard (GSM = Global System for Mobile Communication; UMTS = Universal Mobile Telecommunications System). Further, it is possible that the wireless communication between the mobile devices 50, 60 and 70 and network side resources is performed by help of a wireless LAN protocol.

According to a preferred embodiment of the invention, the communication network 1 comprises, beside a wireless communication system, one or several fixed communication networks, for example data networks as IP networks (IP= Internet Protocol) or telephone networks as PSTN networks or ISDN networks (PSTN = Public Switched Telecommunication Network; ISDN = Integrated Services Digital Network). Further, it is possible that the different networks, which form the communication network 1, are assigned to different network operators or service operators.

The mobile devices 50, 60 and 70 are mobile phones or PDAs (= Personal Digital Assistant) equipped with a network communication unit for communicating with the communication network 1 via an air interface. For example, the mobile device 50 is a GSM phone, the mobile device 60 is a UMTS phone and the mobile device 70 is a PDA communicating via a wireless LAN interface with the communication network 1. The mobile devices 50, 60 and 70 are respectively assigned to one or several users. For example, the mobile devices 50, 60 and 70 are assigned to a user 81, 82 and 83, respectively. Further, it is possible that two or more mobile devices are associated with a single user.

The network server 2 is a localization server, which determines or collects the positions of one or several mobile devices and offers these data as service to entities connected with the communication network 1.

The network server 3 supports the provisioning of services to the mobile devices 50, 60 and 70. The servers 41, 42 and 43 are service resources offering one or several telecommunication services. Such telecommunication services are, for example, information services, routing services or any kind of enhanced services.

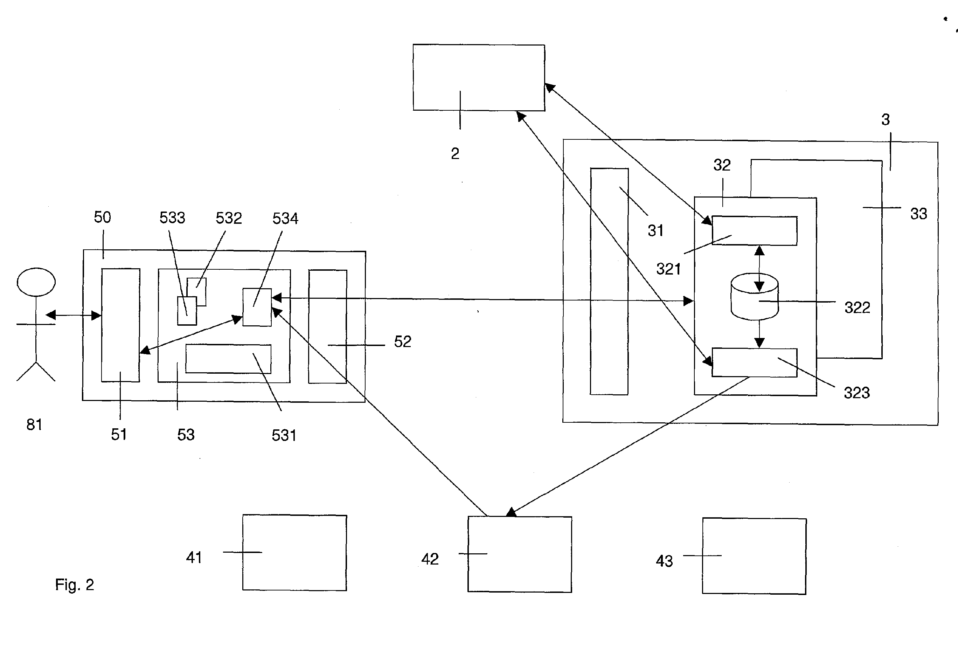

In the following, the details of the mobile devices 50, 60 and 70 and of the network servers 2, 3, 41, 42 and 43 are described by hand of Fig. 2.

Fig. 2 shows the user 81, the mobile device 50 and the network servers 2, 3, 41 and 43.

The mobile device 50 is a GSM mobile phone with GPRS capability (GPRS = General Package Radio Service). It is formed by an electronic circuit comprising one or several microprocessors and a high frequency radio part, an antenna, a battery pack and input and output means, for example a keyboard, a TFT display (TFT = Thinner Film Transistor), a microphone, a loudspeaker and a digital camera. Further, the mobile device 50 comprises a plurality of software programs executed by the one or several microprocessors of the hardware platform of the mobile device 50. The functions of the mobile device 50 are mainly provided by the execution of these software programs on the hardware platform of the mobile device 50.

From the functional point of view, the mobile device 50 comprises a user interface communication unit 51, a network communication unit 52 and a control unit 53.

The user interface communication unit 51 is constituted by the above described input/output means (keyboard, display...) and the associated hardware and software driver elements.

The network communication unit 52 comprises functionalities for exchanging data with the communication network 1 via a packet based data transfer service. But, it is also possible that the mobile device 50 does not support a packet based exchange of data via the air interface. In this case, the communication unit 52 comprises functionalities for exchanging data with the communication network 1 via a circuit switched data transfer service. For example, this service transfers data via a voice channel established via the air interface.

The control unit 53 comprises a common function platform 45 and several function elements 533, 532 and 534. The function platform 531 comprises an engine for executing one or several platform independent programming languages (for example a java virtual machine) and the function elements 533, 532 and 534 are formed by application software encoded in this programming language.

But, it is also possible that the function platform 531 is formed by a system platform constituted by hardware resources (processor, peripheral devices, memory...) and a software platform (operation system, data base...). According to this embodiment of the invention, the function elements 533, 532 and 534 are application programs executed by help of this system platform.

The function elements 533 and 532 implement services like voice communication services, data base services, e-mail services and so on. The function element 534 is a client application interacting via the network communication unit 52 with an associated server application of the network server 3.

The network server 2 is a localization server of the wireless communication network used by the terminal 50 for communicating via the communication network 1. For example, the localization server 2 is a GSM localization server which collects localization data of a predefined set of GSM mobile phones.

For example, the localization server 2 determines the base station actually used for communicating with the respective mobile phone or weighting the quality of the radio signals received by the mobile phone from the surrounding base stations. Further, it is possible that these mobile phones are equipped with a global positioning system (GPS receiver) currently determining the position of the mobile phone. The mobile phone periodically transmits such calculated position data to the localization server 2. Further, it is possible that these data are periodically accessed by the localization server 2 by means of a polling mechanism. Further, the signal quality of received radio frequency signals from surrounding base stations may be in the same manner transmitted from the mobile phone to the localization server 2. Further data, for example the currently used base station or mobile switching device, are determined by means of directly accessing network elements of the communication network 1.

The localization server 2 evaluates such collected data and determines by help of this evaluation the actual position of such mobile phones.

The network server 41 is an IN server which provides IN services through the communication network 1 (IN = Intelligent Network). Further, it is possible that the network server 41 provides services by help of a PARLEY interface.

The network server 42 is an internet server providing services via IP based communications (IP = Internet Protocol).

The network server 43 is a WAP server providing services via the WAP protocol (WAP = Wireless Application Protocol).

The communication network 1 may be connected with a plurality of network servers 41, 42 and 43 providing a wide variety of services to users of the communication network 1.

The network server 3 is formed by a hardware platform comprising, for example, one or several microprocessors and peripheral devices, a software platform and a plurality of application programs executed by the hardware platform. The functionalities of the network sever 3 are performed by the execution of such application programs by the hardware and software platform of the network server 3. From functional point of view, the network server 3 comprises a network communication unit 31 and one or several location agents, for example the location agents 32, 33 and 34.

The communication unit 31 comprises functionalities for enabling communications with the mobile devices 50, 60 and 70 via the communication network 1. For example, the communication unit 31 provides functionalities for processing the TCP/IP protocol stack (TCP = Transport Control Protocol; IP = Internet Protocol) and for processing WAP or WWW protocols (WAP = Wireless Application Protocol; WWW = World Wide Web). Further, the communication unit 31 administrates and manages communication relations between mobile agents as the mobile agents 32, 33 and 34 and the network servers 41, 42, 43 and 2 as well as the mobile devices 50, 60 and 70.

Each of the location agents of the network server 3 is assigned to one of the users of the communication network 1. For example, the location agents 32, 33 and 34 are assigned to the users 81, 82 and 83, respectively. Further, each of the mobile devices is equipped with a specific client application interacting with a dedicated location agent of the network server. For example, the function element 534 interacts via the communication network 1 with the location agent 32, wherein the function element 534 acts as client application and the location agent 32 acts as dedicated server application.

In the following, the details of the location agents 32, 33 and 34 are described by hand of the location agent 32.

From functional point of view, the location agent 32 comprises two function elements 321 and 323 and a data base 322.

The data base 322 comprises a set of user profile data defining user behavior or user preferences. For example, user profile data comprises data describing the usual user tracking path, the usual consumer behavior of the user and a set of preference attributes set by the user. The usual user tracking path is described by a set of data describing a time/position profile of the user. The consumer behavior of the user is described by a set of preference attributes assigned to time, consumed services or service classes, position of the user and further parameters, for example weather forecast or temperature.

The user profile data are preferably encoded by help of XML (XML = Extended Markup Language) according to a preset data structure common to all location agents 32, 33 and 34.

The function element 321 monitors user behavior or user preferences of the user assigned to the location agent 32. For example, it periodically accesses the localization server 2 and determines the current position of the mobile device 50 associated with the user 81. Further, it monitors the consumer behavior and local data like temperature by help of contacting the function element 534. The function element 534 is in a position to monitor the services consumed by the user 81 through the mobile device 50. Further, it is in a position to monitor all data locally determined by the mobile device 50. Further, it is in a position to access data of local applications, for example time table or e-mail.

Further, it is possible that the user 81 inputs one or several preference attributes via the user interface communication unit 51. The function element 534 evaluates such user inputs and transmits them via the communication network 1 to the function element 321. Further, it is possible that the function element 321 determines based on the collected user profile data a set of preference attributes which has to be entered by the user. Then, it sends a corresponding request to the function element 534. The function element 534 requests from the user 81 via the user interface communication unit 51 the inputting of such determined preferences. For example, it requests the inputting of preference attributes describing user preferences for specific points of the usual user tracking path.

The function element 321 establishes the user profile data by analyzing such monitored data. It compares the current monitored user behavior or user preferences with user behavior or user preferences encoded in the user profile data. Dependent on that comparison, it dynamically adapts the user behavior or user preferences defined by the user profile data to changes of user data or user preferences.

But, it is also possible that the location agent 32 is not equipped with the function element 321 and the user profile data of the data base 322 are predefined.

The function element 323 determines location data defining the current location of the mobile device associated with the user 81. For example, it accesses the localization server 2 and requests the transmission of data describing the current position of the mobile device 50. If the mobile device 50 is equipped with a global positioning system, it is possible that it directly contacts the function element 534.

It is possible that the function element 323 determines beside such location data one or several further context data describing the current situation of the user. For example, the function element 323 determines time or data like temperature or kind of weather the user is presently confronted with.

The function element 323 analyzes context data comprising location data, user profile data and possibly determined further data. Based on that analysis it creates a corresponding request requesting the provisioning of a specific service and sends this service request to an appropriate service resource.

For example, it correlates the present available location data and further context data with user profile data and assumes by help of such correlation the kind of service which may be presently of interest for the user. When detecting such situation, it determines by help of a lookup table a corresponding service resource able to provide such kind of service, defining the necessary service attributes and creating a service request adapted to the determined service resource and the determined service attributes. Then, it sends this service request to the determined service resource.

For example, the function element 323 concludes after the analysis of context data that a specific kind of information service might be of interest for the user. Then, the function element 323 selects an information service, for example, the network server 22 that is able to provide the specific kind of information which might be of interest for the user 81. Then, it defines the attributes of the query that has to be sent to the network service 42 to filter out the information which might be of interest for the user 81.

Further, it is possible that the function element 323 asks for acknowledgement of the user, before sending the service request. The function element 323 sends a request message to the function element 534, if it detects a service of interest. The request message comprises a description of the determined service and requests the function element 534 to contact the user 81 via the user interface communication unit 51 for asking whether this service should be provided. The user's acknowledgment is reported back to the function element 523 which in the following creates the service request.

When receiving the service request, the service resource, for example the network server 42, directly contacts the mobile device 50 for the provisioning of the requested service. But, it is also possible that the service is provided through the location agent 32. For example, the service resource sends the requested information back to the function element 323 which forwards this information via the function element 534 to the user 81.

Further, it is possible that the service resource is located within the mobile device 50 and directly provides the service via the user interface communication unit 51 to the user 81. For example, the function element 523 plays the role of an addressed service resource which receives the service request from the function element 323 via the function element 534. When receiving the service request, it directly communicates with the user 81 via the user interface communication unit 51.

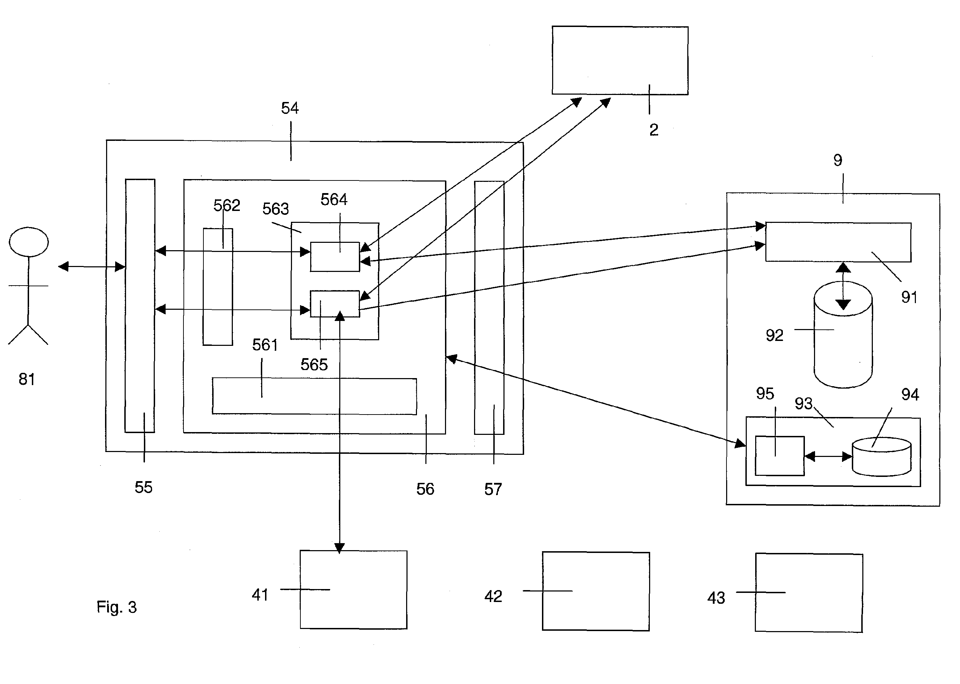

In the following, further embodiments of the invention are described by help of Fig. 3.

Fig. 3 shows a communication system comprising the network servers 2, 41, 42 and 43, a mobile device 54 and a network server 9. The mobile device 54 and the network servers 2, 9, 41, 42 and 43 are connected via the communication network 1.

The mobile device 54 is a mobile phone or a PDA, for example as described with respect to Fig. 1 and Fig. 2. From functional point of view, the mobile device 54 comprises a user interface communication unit 55, a network communication unit 57 and a control unit 56. The control unit 56 comprises a function platform 561, a function element 562 and a location agent 563.

The user interface communication unit 55, the network communication unit 57, the function platform 45 and the function element 562 are arranged as the user interface communication unit 51, the network communication unit 52, the function platform 531 and the function element 533 of Fig. 2, respectively.

The location agent 563 is formed by a mobile agent according to mobile agent technology. The location agent 563 is encoded in a platform independent programming language executed or interpreted by the function platform 561.

The server 9 downloads on demand a location agent 563 via the communication network 1 to the mobile device 54.

The location agent 563 comprises two function elements 564 and 565. The function elements 564 and 565 are arranged as the function elements 321 and 323 of Fig. 2.

From functional point of view, the server 9 comprises a data base 92, a data base access unit 91 and a mobile agent unit 93.

The data base 92 comprises user profile data of several users. For example, the data base 92 comprises user profile data of the users 81, 82 and 83. The data base 92 stores the same kind of user profile data as the data base 322 of Fig. 2 with the difference, that the user data base 92 stores user profile data of more than one user.

The data access unit 91 controls the access to user profile data stored in the data base 92. For accessing user profile data, a security procedure has to be executed between the accessing unit and the data access unit 91. Within this security procedure, the data access unit 91 checks the authorization of the accessing unit, for example by help of asynchronous security keys, security tickets or security-codes. Thereby, it protects user profile data from unauthorized access.

The mobile agent unit 93 comprises a data base 94 and a download unit 95. The data base 94 stores one or several different mobile agents prepared to implement location agents comprising functionalities as the location agent 563. When receiving a request, for example from one of the mobile devices, the download unit 95 selects an appropriate mobile agent, adapts it to the requesting mobile device and sends it to the addressed mobile device.

For example, the mobile device 54 requests a location agent from the network server 9. The download unit 95 downloads the location agent 563 to the mobile device 54, where it is installed on the function platform 561. Then, the function element 564 starts to monitor user behavior or user preferences by help of contacting the localization server 2 and accessing data available within the mobile device 54 and data of further network servers of the communication network 1. Further, it periodically accesses the user profile data of the user 81 stored in the data base 92, and it dynamically establishes and adapts these user profile data by help of the analysis of the monitored data.

The function element 565 determines location data defining the current location of the mobile device 54 and further context data as described with respect to Fig. 2. Further, it accesses the user profile data of the user 81 stored in the data base 92. Based on the analysis of the context data it creates a corresponding service request requesting the provisioning of a specific service and sends this service request to an appropriate service resource. Preferably, the service resource is located within the mobile device 54, for example, provided by the function element 562. But, it is also possible that it contacts a network server, for example the network server 41.

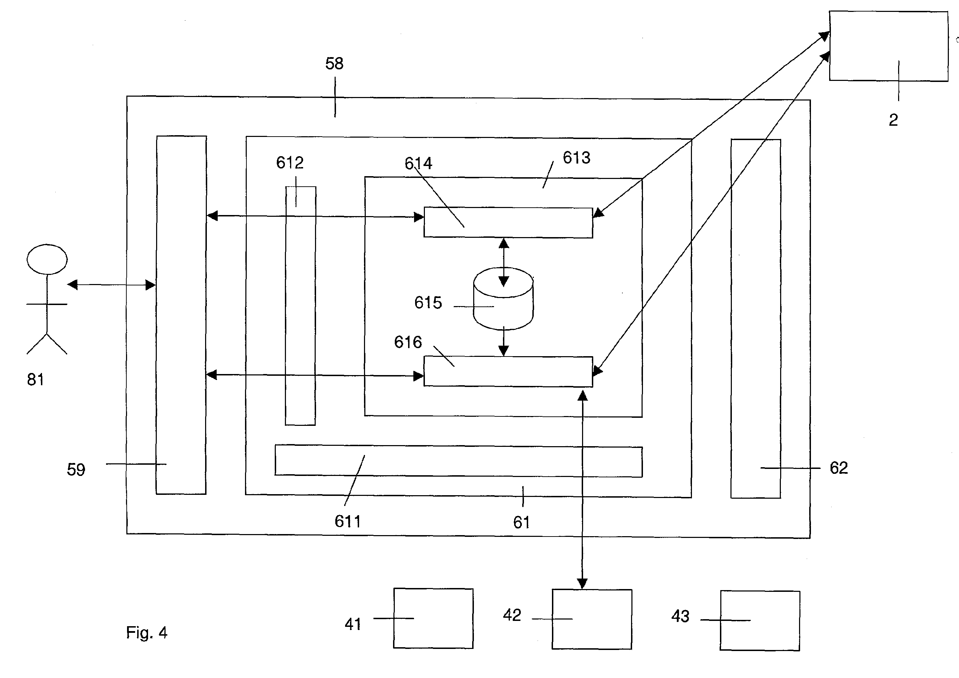

In the following, further embodiments of the invention are described by hand of Fig. 4.

Fig. 4 shows the user 81, a mobile device 58 and the network servers 2, 41, 42 and 43. The mobile device 58 and the network servers 2, 41, 42 and 43 are connected via the communication network 1.

The mobile device 58 is a mobile phone or a PDA as described with respect to the mobile devices 50, 60 and 70 of the Figures 1 and 2. From functional point of view, the mobile device 58 comprises a user interface communication unit 59, a network communication unit 62 and a control unit 61. The control unit 61 comprises a function platform 611, a function element 612 and a location agent 613.

The user interface communication unit 59, the network communication unit 62, the function platform 61 and the function element 612 are arranged as the user interface communication unit 51, the network communication unit 52, the function platform 53 and the function element 533 of Fig. 2.

The location agent 613 is arranged as the location agent 33 of Fig. 2, and comprises two function elements 614 and 616 and a data base 615. The data base 615 comprises the user profile data of the user 81. The function element 614 monitors user behavior or user preferences and dynamically establishes user profile data by analyzing such monitored data. It contacts the localization server 2 for monitoring the users tracking path. Further, it accesses information locally available within the mobile device 58.

The function element 616 contacts the localization server 2 for determining location data which defines the current location of the mobile device 58. But, it is also possible that the mobile device 58 is equipped with a global positioning system which delivers these location data. The function element 616 analyzes the context data, and creates based on this analysis a corresponding service request requesting the provisioning of a specific service and sends this service request to an appropriate service resource. Preferably, this service resource is located within the mobile device 58. But, it is also possible that this service resource is a network server, for example the network server 42.

## Claims

1. A method for providing services through a mobile device (50, 54, 58, 60, 70) connected to a wireless communication network (1),
**characterized in**
**that** the method comprising the steps of: determining location data defining the current location of the mobile device (50, 54, 58); accessing user profile data (322, 92, 615) of an associated user (81), the user profile data (322, 92, 615) defining user behavior or user preferences; analyzing context data comprising said location data and said user profile data (322, 92, 615); and creating based on said analysis a corresponding service request requesting the provisioning of a specific service and sending said service request to an appropriate service resource (41, 42, 43).

2. The method according to claim 1,
**characterized in**
**that** the method further comprising the step of monitoring user behavior or user preferences and dynamically establishing the user profile data (322, 92, 615) by analyzing such monitored data.

3. The method according to claim 2,
**characterized in**
**that** the method comprising the step of monitoring the travel behavior of the user.

4. The method according to claim 1,
**characterized in**
**that** the method comprising the step of executing a security procedure, when accessing the user profile data (322, 92, 615).

5. The method according to claim 1,
**characterized in**
**that** the method further comprising the step of determining further context data, for example time or temperature.

6. A network server (3) for supporting the provisioning of services, the network server (3) comprises a communication unit (31) for communicating via a wireless communication network (1) with mobile devices (50, 60, 70),
**characterized in**
**that** the network server (3) further comprises at least one location agent (32, 33) for: determining location data defining the current location of a mobile device (50, 60, 70); accessing user profile data (322) of an associated user (81, 82, 83), the user profile data (322) defining users behavior or users preferences; analyzing context data comprising said location data and said user profile data (322); and creating based on said analysis a corresponding service request requesting the provisioning of a specific service and sending said service request to an appropriate service resource (41, 42, 43).

7. A mobile device (54, 58) for supporting the provisioning of services, the mobile device (54, 58) comprises a network communication unit (57, 62) for communicating via a wireless communication network (1) and a user interface communication unit (55, 59) for communicating with a user (81),
**characterized in**
**that** the mobile device (54, 58) further comprises at least one location agent (563, 613) for: determining location data defining the current location of the mobile device (54, 58); accessing user profile data (92, 615) of an associated user (81), the user profile data (81, 615) defining users behavior or users preferences; analyzing context data comprising said location data and said user profile data (92, 615); and creating based on that analysis a corresponding service request requesting the provisioning of a specific service and sending said service request to an appropriate service resource (41, 42, 43).

8. The mobile device according to claim 7,
**characterized in**
**that** the location agent (563, 613) is a mobile agent downloaded from a network server (9).

9. The mobile device according to claim 7,
**characterized in**
**that** the location agent (563) is adapted to contact a network server (9) that stores the user profile data (92) of the associated user (81).

10. The mobile device (54, 58) according to claim 7,
**characterized in**
**that** the location agent (563, 613) is adapted to access a location server (2) of the wireless communication network (1) for determining the current location of the mobile device (54, 58).
